# EUROPÄISCHE PATENTSCHRIFT

(11) **EP 1 093 974 B1**
(45) Veröffentlichungstag und Bekanntmachung des Hinweises auf die Patenterteilung: **29.03.2006**
(21) Anmeldenummer: 00119955.3
(22) Anmeldetag: 14.09.2000
(51) Int. Cl.: B60R 16/02, H02J 7/00, H02J 7/14

(54) **Verfahren und Vorrichtung zur Spannungsregelung**
Procedure and device for voltage regulation
Procédé et dispositif pour le réglage de la tension

(30) Priorität: 23.10.1999 DE 19951128
(43) Veröffentlichungstag der Anmeldung: 25.04.2001
(73) Patentinhaber: ROBERT BOSCH GMBH, 70442 Stuttgart (DE)
(72) Erfinder: Frey, Wunibald, 71701 Schwieberdingen (DE); Leunig, Rainer, 70839 Gerlingen (DE); Ahner, Peter, 71032 Boeblingen (DE)

(56) Entgegenhaltungen:
- EP-A- 0 753 925
- EP-A- 0 945 959
- DE-A- 19 645 944

## Beschreibung

Die Erfindung geht aus von einem Verfahren und einer Vorrichtung zur Spannungsregelung in einem Fahrzeugbordnetz nach der Gattung des Hauptanspruchs.

### Stand der Technik

Kraftfahrzeuge mit einer Vielzahl von elektrischen Verbrauchern benötigen derzeit zur optimalen Spannungsversorgung für die Verbraucher 2-Batterien-Bordnetze. Die beiden Batterien werden dabei jeweils von wenigstens einem Generator aufgeladen. Eine der Batterien ist üblicherweise die Starterbatterie, die eine Hochstromfähigkeit aufweist und mehr oder weniger ausschließlich dem Motorstart dient. Aktiviert wird der Motorstart über den Starter und eine Zündschloßklemme. Die zweite Batterie ist die Bordnetzbatterie, die eine hohe Speicherfähigkeit aufweist und zur Bordnetzversorgung, also zur Versorgung der Bordnetzverbraucher bei unzureichender Stromabgabe durch den Generator, dient. Die Bordnetzbatterie muß, beispielsweise bei Fahrzeugstillstand sowie unzureichend hoher Drehzahl des Motors und damit auch des Generators, die Stromversorgung mit übernehmen.

Die Regelung des Generators sowie die Steuerung der Energiezuteilung wird üblicherweise mit Hilfe eines Bordnetzsteuergeräts durchgeführt. Ein 2-Batterien-Bordnetz mit Bordnetzsteuergerät wird beispielsweise in der DE-OS 196 45 944 beschrieben.

In diesem bekannten 2-Batterien-Bordnetz liegt das Steuergerät zwischen den beiden Batterien. Es umfaßt einen Spannungswandler mit integrierten Schaltern, über die die beiden Batterien miteinander verbunden werden können oder über die eine Unterbrechung der Verbindung unter bestimmten Bedingungen möglich ist. Der Spannungswandler ist so ausgestaltet, daß er die erforderlichen Gleichspannungswandlungen durchführen kann. Angesteuert wird der Spannungswandler mit Hilfe eines im Bordnetzsteuergerät integrierten Mikrocomputers, der seinerseits mit dem Steuergerät des Motors in Verbindung steht und mit diesem Daten austauscht, insbesonders Daten bezüglich der herrschenden Motorbedingungen sowie bezüglich der Spannungen und/oder Temperaturen im Bordnetz. Diese Informationen werden vom Mikrocomputer des Bordnetzsteuergeräts ausgewertet und bei der Regelung des Generators sowie bei der Ansteuerung der Schaltmittel des Spannungswandlers mitberücksichtigt. Der Mikrocomputer des Bordnetzsteuergeräts wird über einen schaltbaren Feldeffekttransistor an die Versorgungsspannung gelegt, wobei die Ansteuerung des Feldeffekttransistors so erfolgt, daß das Bordnetzsteuergerät entweder an der Spannung liegt oder von dieser abgekoppelt wird.

Bei dem in der DE-OS 196 45 944, die als nächstliegender Stand der Technik betrachtet wird, dargestellten 2-Batterien-Bordnetz sind einzelne Komponenten nur schematisch dargestellt. Die Verbraucher sind im einzelnen unterteilt in startrelevante Verbraucher bzw. startrelevante Verbrauchergruppen wie Zündung, Einspritzung oder Mittel zum Verglühen, abschaltbare Verbrauchergruppen wie Sitz- und Scheibenheizungen, Heizgebläse, Radio, Komfortelektrik usw. und in nicht abschaltbare Verbrauchergruppen wie Stand-, Fahr-, Brems- und Blinkleuchten. Die Verbrauchergruppen werden über geeignete elektronische Schalter an die Versorgungsspannung gelegt, die beispielsweise von der Bordnetzbatterie geliefert wird. Die startrelevanten Verbraucher können anstatt über einen Schalter über eine Diode mit dem Spannungswandler in Verbindung stehen.

Für das Zusammenwirken der einzelnen Bordnetzkomponenten gilt, daß an die Starter- und Bordnetzbatterie üblicherweise unterschiedliche Spannungen angelegt werden. Damit ein sicherer Motorstart gewährleistet ist, wird die Starterbatterie vorrangig und durch die batterietemperaturgeführte Ladespannung möglichst schnell geladen. Zur Reduzierung der Energieaufnahme durch Stillstandsverbraucher wird das Steuergerät bei abgeschalteter Zündung ebenfalls abgeschaltet. Damit ist die Ladespannung der Starterbatterie abhängig von der Batterietemperatur und von der Stellung des Zündschalters. Die Ladung der Starterbatterie erfolgt daher nur wenn der Zündschalter in "Zündung ein" steht.

Bei den derzeit bekannten 2-Batterie-Bordnetzen unterliegen sowohl der elektrische Verbrauch als auch die Generatorstromabgabe starken zeitlichen Schwankungen. Kosten-, bauraum- und gewichtoptimierte Bordnetze sehen vor, daß auch bei drehendem Verbrennungsmotor elektrische Leistungen zeitweise aus der Batterie gedeckt werden, sofern die Generatorleistung nicht ausreicht. Wegen der Begrenzung der Ladedauer für die Starterbatterie, die, wie erwähnt, nur bei "Zündung ein" stattfinden kann, muß das Nachladen der Starterbatterie unmittelbar nach dem Start erfolgen, damit die Startsicherheit auch bei Fahrten von kurzer Dauer gewährleistet ist. Unmittelbar nach dem Motorstart sind jedoch häufig viele elektrische Verbraucher eingeschaltet, beispielsweise Heizgebläse, Scheiben-, Sitzheizungen, Klimaanlage oder Kühlerlüfter. Diese Verbraucher benötigen selbst elektrische Energie, die für die Aufladung der Starterbatterie fehlt.

Das Laden der Starterbatterie und hohe Verbraucherleistungsanforderungen unmittelbar nach dem Start bedingen, daß vom begrenzten Leistungsangebot des Generators verhältnismäßig viel an die Starterbatterie und relativ wenig an die Bordnetzbatterie abgegeben wird. Bei besonders hohem Leistungsbedarf der Verbraucher und niedrigem Drehzahlangebot wird die Bordnetzbatterie durch die vorrangige Ladung der Starterbatterie zusätzlich belastet, es kann in diesem Fall die Bordnetzspannung unter die Nennspannung für die elektrischen Verbraucher absinken und es steht dann nicht genügend Versorgungsleistung zur Verfügung. Damit eine solche Unterversorgung bei herkömmlichen 2-Batterien-Bordnetzen nicht auftritt, müssen Generator und Verbraucher entsprechend überdimensioniert werden, wodurch zusätzliche Kosten verursacht werden. Eine weitere Belastung der Bordnetzbatterie wird durch den schlechten Ladewirkungsgrad durch Schnelladung der Starterbatterie verursacht. Dieser schlechte Ladungswirkungsgrad wird durch eine hohe angelegte Ladespannung hervorgerufen.

Die aus dem schlechten Ladewirkungsgrad resultierenden Verluste werden bei derzeitigen 2-Batterien-Bordnetzen gedeckt aus der Bordnetzbatterie bei unzureichender Generatorstromabgabe bei niedriger Motordrehzahl und gleichzeitig hoher elektrischer Belastung oder aus dem Generator bei ausreichender Generatorstromabgabe. Mögliche Gegenmaßnahmen, die ein Entladen der Bordnetzbatterie verhindern könnten, wären der Einsatz einer größeren Batterie oder eine höhere Stormerzeugung durch Anhebung der Leerlaufdrehzahl oder, bei Fahrzeugen mit Automatikgetriebe, die Einführung zusätzlicher Schaltpunkte. Diese Maßnahmen sind jedoch verbunden mit einer Erhöhung des Kraftstoffverbrauchs und somit als ungünstig anzusehen. Durch Einsatz eines Verbrauchermanagements, bei dem unter bestimmten Umständen Komponenten, die nicht betriebsrelevant sind, abgeschaltet werden, wird eine Verringerung des Fahrzeugkomforts erhalten, solche Maßnahmen sind daher weniger vorteilhaft. Allerdings wird durch die vorstehend genannten Maßnahmen einigermaßen sichergestellt, daß ein Fahrzeugstart möglich ist.

Dennoch kann bei extrem kritischen Fahrzuständen eine für den Start ausreichende Ladung der Starterbatterie nicht mehr garantiert werden, dies gilt bei tiefen Außentemperaturen und längeren Abkühlungspausen zwischen aufeinanderfolgenden Fahrten von kurzer Dauer, bei denen jeweils ein Kaltstart mit hohen Teilentladungen der Starterbatterie auftreten und die Entladung der Starterbatterie auf der sich anschließenden kurzen Fahrt nicht voll kompensiert werden kann. Eine Verstärkung des Generators über die zur Schnelladung der Starterbatterie erforderlichen Leistung hinaus würde den Ladezustand der Bordnetzbatterie durch geringere Ladungsentnahme bei geringem Drehzahlangebot verbessern, hat aber selbst keinen Einfluß auf die Ladung der Starterbatterie, da die Ladespannung durch die Gasungspannung beschränkt ist. Bei Leistungsüberschuß in Fahrtphasen mit höherem Drehzahlniveau regelt der vergrößerte Generator auf dieselbe Leistung ab, wie ein kleinerer. In Fahrtphasen mit niedrigem Drehzahlniveau wird die Schnelladung der Starterbatterie durch Stromentnahme aus der Bordnetzbatterie durchgeführt.

Die stufenweise abnehmende Ladung der Starterbatterie reicht in kurzen Fahrzyklen mit Abkühlungspausen nur für eine begrenzte Anzahl von Startvorgängen aus. Kurze Pausen zwischen den Fahrten sind dabei weniger kritisch, da beim angewärmten Verbrennungsmotor Startvorgänge mit verringertem Schleppmoment und kürzerer Dauer oder Warmstarts mit geringer Ladungsentnahme aus der Starterbatterie vorliegen.

Unter der Voraussetzung, daß der Ladezustand der Bordnetzbatterie ausreichend ist, kann bei bekannten 2-Batterien-Bordnetzen die Starterbatterie mit unzureichendem Ladezustand zur Wiederherstellung der Startsicherheit unter Umgehung des Gleichspannungswandlers durch die Bordnetzbatterie gestützt werden. Das Schließen eines entsprechenden Schalters bei abgeschalteter Zündung führt zu einem Ladungsausgleich zwischen Starter- und Bordnetzbatterie. Auch falls eine Diode zwischen den beiden Batterien angeordnet ist, die das Entladen der Starterbatterie in die Bordnetzbatterie verhindert, dauert das Nachladen der Starterbatterie wegen der fehlenden Spannungsanhebung bei passivem Gleichspannungswandler sehr lange.

### Vorteile der Erfindung

Das erfindungsgemäße Verfahren und die erfindungsgemäße Vorrichtung zur Spannungsregelung mit den Merkmalen des Anspruchs 1 hat den Vorteil, daß gegenüber bekannten 2-Batterien-Bordnetzen eine Erhöhung der Startsicherheit erhalten bleibt, ohne daß die Batterien und/oder der Generator vergrößert werden müssen. Gleichzeitig wird ein verbesserter Wirkungsgrad und eine Erhöhung der Batterielebensdauer erzielt. Durch den verbesserten Wirkungsgrad läßt sich der-Kraftstoffverbrauch gegenüber herkömmlichen Systemen verringern. Erzielt werden diese Vorteile durch ein erfindungsgemäßes Verfahren zur Spannungsregelung mit den Merkmalen des Anspruchs 1 sowie mit einer Vorrichtung zur Durchführung der erfindungsgemäßen Verfahren zur Spannungsregelung. Dabei wird die Ladedauer sowie der Zeitverlauf des Ladestrom für die Starterbatterie an die herrschenden Bedingungen angepaßt. Insbesonders wird die Starterbatterie auch bei stillgesetztem Fahrzeug noch nachgeladen, wobei diese Nachladung über einen in der Steuereinrichtung integrierten Spannungswandler erfolgt, der durch die in der Nachlaufphase ebenfalls noch aktive Steuereinrichtung in aktivem Zustand gehalten wird. Die Steuereinrichtung umfaßt in vorteilhafter Weise einen eigenen Prozessor, beispielsweise einen Mikroprozessor sowie einen Timer. In vorteilhafter Weise ist die Steuereinrichtung mit dem eigentlichen Motorsteuergerät verbunden und tauscht mit diesem Daten und Informationen bezüglich der herrschenden motorspezifischen Bedingungen sowie der Bordnetzbedingungen aus. Diese Bedingungen sind in vorteilhafter Weise die Motordrehzahl, die Batterie oder Reglertemperatur, der Generatorstrom, Informationen bezüglich "Zündung ein", die Reglerspannung und das Erregerstromtaktverhältnis.

Weitere Vorteile der Erfindung werden durch die in den Unteransprüchen angegebenen Maßnahmen erzielt.

### Zeichnung

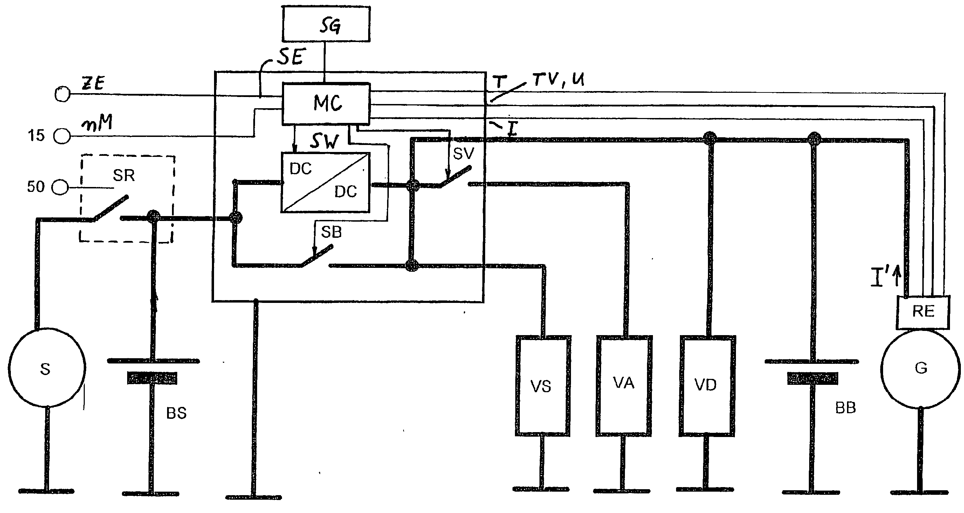

Ein Ausführungsbeispiel einer Vorrichtung zur Spannungsregelung zur Durchführung eines der erfindungsgemäßen Verfahren ist in der Figur dargestellt und wird in der nachfolgenden Beschreibung näher erläutert.

### Beschreibung des Ausführungsbeispiels

In der Figur sind die erfindungswesentlichen Komponenten eines 2-Batterien-Bordnetzes dargestellt. Dabei ist im einzelnen der von einem nicht dargestellten Verbrennungsmotor angetriebne Generator mit G bezeichnet, seine Ausgangsspannung wird mit Hilfe des dem Generator G zugeordneten Spannungsreglers RE auf eine vorgebbare Spannung U geregelt, deren Höhe optimal an die Erfordernisse anpaßbar ist. Der Generator G liefert die für die Versorgung des Bordnetzes benötigte elektrische Energie, wobei bei dem Ausführungsbeispiel die Abgabe des Stromes I' des Generators G über den Spannungsregler RE gesteuert wird.

Mit dem Spannungsregler RE verbunden ist die Bordnetzbatterie BB, die über eine Steuereinrichtung SE, beispielsweise ein Steuergerät mit Prozessor, beispielsweise mit Mikrocomputer und Timer, mit der zweiten Batterie, der Starterbatterie BS, verbindbar ist. Die Starterbatterie BS ist ihrerseits mit dem Starter S verbunden und über das Startrelais SR mit einem weiteren Anschluß des Starters S verbindbar. Vom Startrelais SR ist noch die üblicherweise als Klemme 50 bezeichnete Klemme dargestellt.

Die Steuereinrichtung SE umfaßt einen Mikroprozessor MC, einen Gleichspannungswandler SW (DC/DC-Wandler), der zwischen den Plusanschlüssen der Bordnetzbatterie BB und der Starterbatterie BS liegt. Parallel zum Spannungswandler SW ist ein Schalter SB angeordnet, ein weiterer Schalter SV steht mit dem Spannungswandler SW in Verbindung. Die beiden Schalter SB und SV sind beim Ausführungsbeispiel Bestandteil der Steuereinrichtung SE, sie könnten auch außerhalb der Steuereinrichtung SE liegen. Über den Schalter SB können die Bordnetzbatterie BB und die Starterbatterie BS miteinander verbunden werden. Über den Schalter SV sind abschaltbare Verbraucher VA an den Spannungswandler SW bzw. die Bordnetzbatterie BB schaltbar. Nicht abschaltbare Verbraucher VD liegen direkt am Pluspol der Bordnetzbatterie BB und startrelevanter Verbraucher VS sind einerseits mit dem Spannungswandler SW sowie der Bordnetzbatterie BB verbunden und werden bei geschlossenem Schalter SB zusätzlich mit der Starterbatterie BS verbunden.

Der Steuereinrichtung SE bzw. dem Mikroprozessor MC der Steuereinrichtung SE der wenigstens einen Digitalrechner mit Timer, Speicher, Analog/Digital-Wandler ADW und Mittel zur Signalausgabe beziehungsweise zur Ausgabe von Ansteuersignalen umfaßt, werden über die Klemme 15 Signale ZE zugeführt, die eine Aktivierung der Zündung erkennen lassen ("Zündung ein"). Weiterhin wird über wenigstens einen zusätzlichen Anschluß die Motordrehzahl nM zugeführt. Eine Verbindung zum Motorsteuergerät SG kann vorgesehen werden. Über weitere Eingänge wird der Steuereinrichtung SE ein Temperatursignal T, beispielsweise die Temperatur des Spannungsreglers RE zugeführt, außerdem die Regelspannung U, das Erregerstromtastverhältnis TV und der Generatorstrom I. Diese Größen müssen nicht alle zugeführt werden, sondern es ist frei wählbar, welche der Größen der Steuereinrichtung SE zugeführt wird und welche der Größen von der Steuereinrichtung SE zur Spannungsregelung berücksichtigt wird. Die Signalleitungen sind in der Figur durch dünne Linien dargestellt, spannungsführende Leitungen sind mit dicken Linien dargestellt.

Mit der in der Figur dargestellten Schaltungsanordnung lassen sich hohe Ladewirkungsgrade bei der Batterieladung erzielen. Dazu wird die Wirkungsgradkette Bordnetzbatterie "Entladen-Laden" weitgehend umgangen. Es wird die der Starterbatterie BS zur Verfügung gestellte Ladeleistung an bedarfsabhängig schwankende Leistungen elektrischer Verbraucher und an die motordrehzahlabhängig schwankende Leistungsabgabe des Generators G angepaßt. Eine solche Vorgehensweise ist möglich, da die Steuereinrichtung SE für das 2-Batterien-Bordnetz um einen Digitalrechner mit Timer oder einer analogen Beschaltung erweitert ist. Damit läßt sich eine Zeitsteuerung realisieren, mit der die Ladedauer der Starterbatterie BS verlängert werden kann. Auch ohne Verwendung des Timers kann die Batterieladung und die Steuereinrichtung SE abgeschaltet werden, wenn der Ladestrom einen vorbestimmten Grenzwert unterschreitet. Die Verwendung des Timers und der zeitliche Verlauf des Ladestroms erlaubt durch Vergleich mit Batteriekennlinien eine Batteriediagnose. Die erforderlichen Ansteuersignale für die Schalter liefert der Mikroprozessor. Weiterhin lassen sich die Ladezeiten für die Starterbatterie BS in Zeitabschnitte hoher Leistungsreserve des Generators G verlegen. Ein vorrangiges Laden der Starterbatterie BS soll weitgehend vermieden werden. Ferner soll vorrangiges Laden der Starterbatterie BS nur nach einer, hinsichtlich ihrer Schwere gewichteten Folge "kritischer Fahrzyklen" erfolgen, wobei gemessene, berechnete oder aus Kennlinien ermittelte Schätzwerte für Ladezustände zur Entscheidung für die Art der Batterieladung und zur Anfangswertbestimmung der Integration zu verwenden sind. Solche Grenzwerte können definiert werden als:
unterster Grenzwert für leere Batterie. Es wird dann der Anfangswert "Integration für Laden" zurückgesetzt,
unterer Grenzwert für vorrangiges Laden,
mittlerer Grenzwert für Laden bei Generatorleistungsreserve und
oberer Grenzwert für volle Batterie der Anfangswert "Integration für Entladen" wird zurückgesetzt.

Bei Fahrzeugen, die Fahrten mit Mischungen aus ladebilanzkritischen Stadt- und -unkritischen Überlandzyklen durchführen, wird der obere Grenzwert für die Schätzung häufig erreicht. Der Vergleich mit einer gemessenen Ladestromaufnahme der intakten Starterbatterie BS erlaubt gegebenenfalls ein Zurücksetzen des Anfangswerts der Integration auf "volle Batterie", so daß die zeitliche Integration für die Ladezustandsschätzung ausreichende Ergebnisse erwarten läßt. Stellt sich in unkritischen Zuständen bei Schätzwert "volle Starterbatterie" nach längerer Fahrtdauer noch ein nennenswerter Ladestrom ein, deutet dies auf eine defekte Starterbatterie BS hin, dies kann dem Fahrer über eine geeignete Anzeige angezeigt werden. Damit läßt sich abgesehen vom plötzlichen Ausfall der Starterbatterie BS über ein Diagnosesystem frühzeitig eine Meldung absetzen, bevor die Startsicherheit verloren ist.

Bei extrem ladebilanzkritischen Fahrzuständen kann die Startsicherheit auch beim erfindungsgemäßen Verfahren zur Spannungsregelung verlorengehen, sofern einfach zu wenig Fahrzustände mit ausreichender Energiebereitstellung auftreten, in diesem Fall besteht jedoch durch die Überwachung die Möglichkeit, den Fahrer über das Diagnosesystem zu warnen, daß nur noch wenige Starts möglich sind. Wird weiterhin nicht mehr Energie zur Verfügung gestellt durch weiterhin ladebilanzkritische Fahrzustände, kann in einer ersten Stufe zusätzlich zum erfindungsgemäßen Regelverfahren eine Verbraucherabschaltung durchgeführt werden, bei der zunächst auf die komfort- und in einer zweiten Stufe auch auf die sicherheitskritischen Verbraucher verzichtet wird.

Die erfindungsgemäße Verlängerung der Ladedauer für die Starterbatterie BS zur Steigerung des Ladewirkungsgrades wird erreicht, indem das Abschalten der Steuereinrichtung SE nicht unmittelbar mit der Stellung des Zündschalters (Signal ZE) verknüpft wird, sondern indem die Steuereinrichtung SE erst nach einer von der Vorgeschichte abhängigen vorgebbaren oder veränderbaren Dauer abgeschaltet wird. Solange die Steuereinrichtung SE, also das Steuergerät mit Mikrocomputer und Timer, noch eingeschaltet bleibt, wird auch der Spannungswandler SW im aktiven Zustand betrieben und die Spannung, die der Starterbatterie BS zur Verfügung gestellt wird, kann auf geeigneten optimalen Werten gehalten werden. Wann das Steuergerät abgeschaltet und die Ladung der Starterbatterie BS beendet wird, kann nach einem der folgenden Kriterien entschieden werden:
1. Nach Ausschalten der Zündung, zu Erkennen durch Aktivierung der Zündung, durch Auswertung des Generatorstroms I und der Reglertemperatur T,
2. nach erfolgtem Motorstart, erkennbar am Motordrehzahlsignal nM, zusätzlich kann noch die Reglerspannung U und/oder die Reglertemperatur T berücksichtigt werden. Der erfolgte Motorstart kann auch allein aus dem zeitlichen Verlauf der Generatorspannung U erkannt werden, die nach erfolgtem Motorstart in vorgebbarer Weise ansteigen muß.
3. Die Aktivierung des Steuergeräts bzw. der Steuereinrichtung SE bzw. die Abschaltung erfolgt nach bekannter voller Starterbatterie BS, dies kann erkannt werden, ausgehend vom zeitlichen Ladestromverlauf oder ausgehend von der Reglerspannung und dem Tastverhältnis des Erregerstroms.

Wird das Steuergerät anhand der Auswertung der oben genannten Größen abgestellt, läßt sich die ausreichende Ladung der Starterbatterie BS auch bei extremen Betriebsbedingungen (kurze Fahrtdauer zwischen den Motorstarts) sicherstellen.

Eine Verlängerung der Ladedauer für die Starterbatterie BS über den Betrieb des Verbrennungsmotors hinaus ermöglicht es, im Fahrbetrieb mit dem Laden der Starterbatterie BS zu warten, bis der Generator G Leistungsreserve aufweist. Dadurch wird die Verbraucherleistung bei Fahrt gleichmäßiger verteilt und es läßt sich eine höhere Generatorauslastung erzielen, verbunden mit einer Steigerung des Ladewirkungsgrades der Starterbatterie BS. Hohe Anteile des Stroms in die Starterbatterie kommen dann direkt aus dem Generator G unter Umgehung der Lade- und Entladewirkungsgrade der Bordnetzbatterie BB. Zur Erreichung dieser Ziele erfolgt das Nachladen der Starterbatterie BS abhängig von der temperatur- und stromabhängig geregelten Generatorspannung U in Phasen mit geringer Generatorauslastung. Zum Erkennen der Generatorauslastung können Informationen aus der gemessenen Regelertemperatur T und/oder dem gemessenen Generatorstrom I und/oder der gemessenen Generatorspannung U und/oder dem Taktverhältnis des Generatorreglers bzw. dem Taktverhältnis des Erregerstroms im Steuergerät analog oder digital verwertet werden. Das Abschalten des Steuergeräts erfolgt, um hohe Ströme bei Fahrzeugstillstand und das Entladen der Bordnetzbatterie BB zu minimieren. Die Ladespannung, der Ein- und/oder Ausschaltzeit und die Ladedauer der Starterbatterie BS sind somit bei der erfindungsgemäß vorgeschlagenen Lösung abhängig von der Batterietemperatur, von der Vorgeschichte der beim Start entnommenen Ladungsmenge, von der Vorgeschichte der Generatorspannung U bei Fahrt und von der Dauer der vorangegangenen Fahrt abhängig. Die Vorgeschichte der beim Start entnommenen Ladungsmenge läßt sich dabei ermitteln aus dem gemessenen Starterstrom und der gemessenen Startdauer oder dem Vergleich von gemessener Bordnetz- oder Generatorspannung oder durch Auswertung des Spannungseinbruchs an der Bordnetzbatterie und der gemessenen Dauer des Spannungseinbruchs unter Berücksichtigung von temperatur- oder ladezustandsabhängigen Batteriekennlinien. Die Vorgeschichte der beim Start entnommenen Ladungsmenge läßt sich auch aus dem Vergleich des gemessenen Bordnetz-, Generator- oder Bordnetzbatterie-Spannungseinbruchs und der gemessenen Dauer des Einbruchs mittels Simulation nach einem mathematisch nachgebildeten Batteriemodell ermitteln, weiterhin können motorspezifische und/oder temperaturabhängige Kennfelder für den Starterstrom und die Startmenge berücksichtigt werden oder es kann eine motorspezifische temperaturabhängige Berechnung für den Starterstrom und die Startmenge mittels Simulation an einem mathematisch nachgebildeten Modell für den Verbrennungsmotor, den Starter und die Batterie ermittelt werden.

Den so ermittelten Schätzwerten für die Einschaltdauer des Steuergeräts und damit des Gleichspannungswandlers sollte ein Sicherheitszuschlag hinzugeführt werden. Ein Überladen der Starterbatterie BS ist bei temperaturgeführter Ladespannung nicht zu befürchten. Die Begrenzung der Ladespannung nimmt den Ladestrom selbsttätig zurück. Durch den Wegfall der Verknüpfung Batterie-Laden/Stellung Zündschloß, kann auf extreme Schnelladung der Starterbatterie BS verzichtet werden und der zeitliche Verlauf des Ladestroms für die Starterbatterie BS läßt sich optimal und schonend an die Batterietemperatur und den Ladezustand anpassen.

## Patentansprüche

1. Verfahren zur Spannungsregelung in einem Fahrzeugbordnetz mit wenigstens zwei von wenigstens einem Generator aufladbaren Batterien, die zur Versorgung von Verbrauchern (VS, VA, VD, S) dienen und miteinander über einen Spannungswandler einer Steuereinrichtung verbindbar sind, wobei der Steuereinheit motor- und/oder bordnetztypische Informationen zufiihrbar sind, die in einer Prozessoreinrichtung mit wenigstens einem Mikrocomputer verarbeitet werden, **dadurch gekennzeichnet, dass** die Steuereinheit (SE) einen Timer umfasst und dass die bereitgestellte Ladeleistung für die als Starterbatterie dienende Batterie (BS) zeitlich an bedarfsabhängig schwankende Leistungsaufnahmen elektrischer Verbraucher (VS, VA, VD) und motordrehzahlabhängig schwankende Leistungsabgaben des Generators (G) bzw. die Generatorauslastung anpassbar ist.

2. Verfahren zur Spannungsregelung nach Anspruch 1, **dadurch gekennzeichnet, dass** zur Erkennung der Auslastung des Generators (G) Informationen aus der gemessenen Reglertemperatur (T) und/oder dem gemessenen Generatorstrom (I)und/oder der gemessenen Generatorspannung (U), und/oder aus dem Taktverhältnis (TV) des Generatorreglers in der Steuereinrichtung (SE) digital oder analog verwertet werden.

3. Verfahren zur Spannungsregelung nach Anspruch 1, **dadurch gekennzeichnet, dass** die Zeitspanne für das Laden der Starterbatterie (BD) abhängig von vorgebbaren Bedingungen anpassbar ist.

4. Verfahren zur Spannungsregelung nach Anspruch 1, 2 oder 3, **dadurch gekennzeichnet, dass** die Steuereinrichtung auch nach Abschalten des Motors für eine vorgebbare Zeitspanne mit Spannung versorgt wird und dass der Starterbatterie (BS) während dieser Zeitspanne die erforderliche Ladespannung über die Steuereinrichtung (SE) zuführt wird.

5. Verfahren zur Spannungsregelung nach einem der vorhergehenden-Ansprüche; **dadurch gekennzeichnet, dass** der Nachlauf der Steuereinrichtung abhängig von vorgebbaren Motor- und/oder Bordnetzkenngrößen beendet wird, wobei diese Kenngrößen der Steuereinrichtung (SE) zugeführt werden oder von der Steuereinrichtung selbst ermittelt werden.

6. Verfahren zur Spannungsregelung nach einem der vorhergehenden Ansprüche, **dadurch gekennzeichnet, dass** die in der Starterbatterie (BS) gespeicherte Ladung abgeschätzt wird und eine Anzeige erfolgt, falls die abgeschätzte Ladung nur noch für wenige Startvorgänge ausreicht.

7. Verfahren zur Spannungsregelung nach einem der vorhergehenden Ansprüche, **dadurch gekennzeichnet, dass** die Ladespannung, der Ein- und/oder Ausschaltzeitpunkt und /oder die Ladedauer der Starterbatterie (BS) abhängig von der Batterietemperatur (T) und/oder von der Vorgeschichte der beim Start entnommenen Ladungsmenge und/oder der Vorgeschichte der Generatorspannung (U) bei Fahrt und/oder von der Dauer der vorangegangenen Fahrt festgelegt werden.

8. Verfahren zur Spannungsregelung nach Anspruch 7, **dadurch gekennzeichnet, dass** die Vorgeschichte der beim Start entnommenen Ladungsmenge abhängig vom gemessenen Starterstrom und der Startdauer oder aus dem Vergleich von gemessenen Spannungseinbrüchen der Bordnetzspannung, der Generatorspannung oder der Batteriespannung und der gemessenen Dauer des Einbruchs unter Berücksichtigung von ladezustandsabhängigen Batteriekennlinien oder aus dem Vergleich gemessener Bordnetz-, Generator- oder Bordnetzbatterie-Spannungseinbruch und gemessener Dauer des Einbruchs mittels Simulation mit einem mathematisch nachgebildeten Batteriemodell und motorspezifischem, temperaturabhängigem Kennfeld für Starterstrom und Startmenge oder motorspezifischer, temperaturabhängiger Berechnung für Starterstrom und Startmenge mittels Simulation an einem mathematisch nachgebildeten Modell für Verbrennungsmotor-, Starter (S) und Batterie (B) ermittelt wird.

9. Vorrichtung zur Spannungsregelung in einem Fahrzeugbordnetz, **dadurch gekennzeichnet, dass** die Ladung der Starterbatterie (BS) nach einem der Verfahren der Ansprüche 1 bis 8 erfolgt.

10. Vorrichtung zur Spannungsregelung nach Anspruch 9, **dadurch gekennzeichnet, dass** die Steuereinrichtung mit dem Motorsteuergerät (SG) in Verbindung steht oder dass die Steuereinrichtung (SE) durch das Motorsteuergerät selbst gebildet wird.

11. Vorrichtung zur Spannungsregelung nach Anspruch 9 oder 10, **dadurch gekennzeichnet, dass** die Bordnetzbatterie und die Starterbatterie unterschiedliche Nennspannungen aufweisen

## Claims

1. Method for voltage regulation in a vehicle power supply system having at least two batteries which can be charged from at least one generator, which are used to supply loads (VS, VA, VD, S) and can be connected to one another via a voltage converter of a control device, in which case the control unit can be supplied with information which is typical of the engine and/or vehicle power supply system and is processed by means of at least one microcomputer in a processor device, **characterized in that** the control unit (SE) has a timer, and **in that** the charging power which is produced for the battery (BS) that is used as a starter battery can be matched in time to demand-dependent fluctuating power consumptions of electrical loads (VS, VA, VD) and to engine rotation speed-dependent fluctuating power outputs from the generator (G), or the generator load level.

2. Method for voltage regulation according to Claim 1, **characterized in that** information from the measured regulator temperature (T) and/or the measured generator current (I) and/or the measured generator voltage (U), and/or from the duty ratio (TV) of the generator regulator is evaluated digitally or in analogue form in the control device (SE) in order to identify the load level on the generator (G).

3. Method for voltage regulation according to Claim 1, **characterized in that** the time interval for charging of the starter battery (BD) can be adapted as a function of predeterminable conditions.

4. Method for voltage regulation according to Claim 1, 2 or 3, **characterized in that** the control device is also supplied with voltage for a predeterminable time interval after the engine has been switched off, and **in that** the starter battery (BS) is supplied with the necessary charging voltage via the control device (SE) during this time interval.

5. Method for voltage regulation according to one of the preceding claims, **characterized in that** the run-on of the control device is ended as a function of predeterminable engine and/or vehicle power supply system characteristic variables, with these characteristic variables being supplied to the control device (SE) or being determined by the control device itself:

6. Method for voltage regulation according to one of the preceding claims, **characterized in that** the charge which is stored in the starter battery (BS) is estimated, and an indication is produced if the estimated charge is sufficient only for a small number of starting processes.

7. Method for voltage regulation according to one of the preceding claims, **characterized in that** the charging voltage, the switching on and/or off time and/or the charging duration of the starter battery (BS) are/is defined as a function of the battery temperature (T) and/or of the previous history of the amount of charge drawn during starting and/or of the previous history of the generator voltage (U) while driving and/or of the duration of the previous journey.

8. Method for voltage regulation according to Claim 7, **characterized in that** the previous history of the amount of charge drawn during starting is determined as a function of the measured starter current and the starting duration or from the comparison of the measured voltage drops in the vehicle power supply system voltage, the generator voltage or the battery voltage and the measured duration of the drop, taking into account battery characteristics which are dependent on the state of charge or from the comparison of the measured vehicle power supply system, generator or vehicle power supply system battery voltage drop and the measured duration of the drop by means of simulation using a mathematically simulated battery model and an engine-specific, temperature-dependent family of characteristics for the starter current and number of starts, or engine-specific, temperature-dependent calculation of the starter current and number of starts, by means of simulation using a mathematically simulated model for the internal combustion engine, starter (S) and battery (B).

9. Apparatus for voltage regulation in a vehicle power supply system, **characterized in that** the starter battery (BS) is charged using one of the methods in Claims 1 to 8.

10. Apparatus for voltage regulation according to Claim 9, **characterized in that** the control device is connected to the engine controller (SG), or **in that** the control device (SE) is formed by the engine controller itself.

11. Apparatus for voltage regulation according to Claim 9 or 10, **characterized in that** the vehicle power supply system battery and the starter battery have different rated voltages.

## Revendications

1. Procédé de régulation de tension du réseau de bord d'un véhicule avec au moins deux batteries pouvant être chargées par au moins un générateur, et qui servent à alimenter des consommateurs (VS, VA, VD, S) en pouvant être reliées ensemble par un convertisseur de tension d'une unité de commande, selon lequel l'unité de commande reçoit des informations typiques au moteur et/ou au réseau de bord, qui peuvent être traitées dans un dispositif à processeur comportant au moins un micro-ordinateur,
**caractérisé en ce que**
l'unité de commande (SE) comporte une minuterie et on adapte dans le temps la puissance de charge fournie à la batterie (BS) servant de batterie de démarrage, aux puissances absorbées variant en fonction des besoins des consommateurs électriques (VS, VA, VD), aux puissances de sortie variant en fonction de la vitesse de rotation du moteur du générateur (G), ou à la décharge du générateur.

2. Procédé de régulation de tension selon la revendication 1,
**caractérisé en ce que**
pour déterminer la décharge du générateur (G), des informations provenant de la température du régulateur (T) mesurée et/ou du courant du générateur (I) mesuré et/ou de la tension du générateur (U) mesurée et/ou du rapport d'horloge (TV) du régulateur de générateur, sont traitées de façon numérique ou analogique dans l'unité de commande (SE).

3. Procédé de régulation de tension selon la revendication 1,
**caractérisé en ce que**
le temps nécessaire à la charge de la batterie de démarrage (BD) peut être adapté en fonction de conditions prédéfinies.

4. Procédé de régulation de tension selon la revendication 1, 2 ou 3,
**caractérisé en ce que**
l'unité de commande est alimentée en tension pour une durée prédéfinie même après la coupure du moteur, et la tension de charge nécessaire est amenée à la batterie de démarrage (BS) pendant cette période par l'intermédiaire de l'unité de commande (SE).

5. Procédé de régulation de tension selon l'une quelconque des revendications précédentes,
**caractérisé en ce que**
le post-fonctionnement de l'unité de commande prend fin en fonction de caractéristiques du moteur et/ou du réseau de bord prédéfinies, ces caractéristiques étant amenées à l'unité de commande (SE) ou déterminées par l'unité de commande elle-même.

6. Procédé de régulation de tension selon l'une quelconque des revendications précédentes,
**caractérisé en ce qu'**
on évalue la charge accumulée dans la batterie de démarrage (BS), et on l'affiche si la charge estimée ne suffit que pour quelques démarrages encore.

7. Procédé de régulation de tension selon l'une quelconque des revendications précédentes,
**caractérisé en ce qu'**
on fixe la tension de charge, le point de connexion et/ou de déconnexion et/ou la durée de charge de la batterie de démarrage (BS), en fonction de la température de la batterie (T) et/ou de l'historique de la quantité de charge prélevée lors du démarrage et/ou de l'historique de la tension du générateur (U) lors d'un déplacement et/ou de la durée du déplacement précédent.

8. Procédé de régulation de tension selon la revendication 7,
**caractérisé en ce qu'**
on détermine l'historique de la quantité de charge prélevée lors du démarrage, en fonction du courant de démarrage mesuré et de la durée de démarrage, ou à partir de la comparaison entre les chutes de tension mesurées de la tension du réseau de bord, la tension du générateur ou la tension de la batterie et la durée mesurée de la chute compte tenu de courbes caractéristiques de la batterie liées à l'état de charge, ou à partir de la comparaison entre une chute mesurée de la tension du réseau de bord, du générateur ou de la batterie du réseau de bord et la durée mesurée de la chute, au moyen d'une simulation avec un modèle de batterie reproduit de façon mathématique et à partir d'un champ de caractéristiques du moteur liées à la température pour le courant de démarrage et la quantité de démarrage, ou par un calcul spécifique au moteur en fonction de la température, pour le courant de démarrage et la quantité de démarrage au moyen d'une simulation avec un modèle, reproduit de façon mathématique, pour un moteur à combustion, le démarreur (S) et la batterie (B).

9. Dispositif de régulation de tension dans un réseau de bord de véhicule,
**caractérisé en ce que**
la charge de la batterie de démarrage (BS) se déroule selon l'un des procédés des revendications 1 à 8.

10. Dispositif de régulation de tension selon la revendication 9,
**caractérisé en ce que**
l'unité de commande est reliée à l'appareil de commande du moteur (SG) ou l'unité de commande (SE) est l'appareil de commande du moteur lui-même.

11. Dispositif de régulation de tension selon la revendication 9 ou 10,
**caractérisé en ce que**
la batterie du réseau de bord et la batterie de démarrage ont des tensions nominales différentes.
